# EUROPÄISCHE PATENTSCHRIFT

(11) **EP 2 937 646 B1**
(45) Veröffentlichungstag und Bekanntmachung des Hinweises auf die Patenterteilung: **25.07.2018**
(21) Anmeldenummer: 15162580.3
(22) Anmeldetag: 07.04.2015
(51) Int. Cl.: F24J 2/52

(54) **MONTAGESYSTEM FÜR EIN DURCH PLATTENFÖRMIGE ELEMENTE ABGEDECKTES FLÄCHENHEIZ- ODER KÜHLSYSTEM**
MOUNTING SYSTEM FOR AN AREA HEATING OR COOLING SYSTEM COVERED BY PLATE-SHAPED ELEMENTS
SYSTÈME DE MONTAGE POUR UN SYSTÈME DE REFROIDISSEMENT OU DE CHAUFFAGE DE SURFACE RECOUVERT D'ÉLÉMENTS LAMELLAIRES

(30) Priorität: 15.04.2014 DE 102014105384
(43) Veröffentlichungstag der Anmeldung: 28.10.2015
(73) Patentinhaber: Rupp, Jürgen, 72393 Burladingen-Ringingen (DE)
(72) Erfinder: Rupp, Jürgen, 72393 Burladingen-Ringingen (DE)
(74) Vertreter: Kohler Schmid Möbus Patentanwälte

(56) Entgegenhaltungen:
- EP-A2- 2 573 486
- DE-A1- 10 125 773
- DE-A1-102011 106 083
- DE-B3-102009 005 540
- DE-B3-102011 088 153
- DE-U1-202012 004 333
- JP-A- 2013 147 831

## Beschreibung

Im Zuge der Förderung der Nutzung erneuerbarer Energien wird zunehmend die Infrarotstrahlung der Sonne zum Heizen von Gebäuden genutzt. Dazu können an den Dächern und/oder Fassaden von Gebäuden oder auch an vom Gebäude unabhängigen Anlagen Sonnenkollektoren eingesetzt werden. Diese Kollektoren können als Flachkollektoren oder Röhrenkollektoren ausgeführt sein. Werden diese Kollektoren an Gebäudefassaden eingesetzt, so ist es wünschenswert, diese aus optischen Gründen nach außen durch plattenförmige Elemente abzudecken. Diese plattenförmigen Elemente können auch Photovoltaikmodule sein, sodass die Sonneneinstrahlung gleichzeitig zur Stromerzeugung genutzt werden kann.

Weiter sind Flächenheizsysteme als Fußboden- oder Wandheizungen bekannt, die ebenfalls teilweise durch plattenförmige Elemente, beispielsweise durch Fliesen, nach außen abgedeckt sind.

Aus der DE 20 2012 004333 U1 ist eine Vorrichtung zur Abstützung von Solarmodulen mit Vierkantträgern und U-förmigen, schwenkbaren Montageschienen bekannt.

Die JP 2013 147831 A beschreibt ein Montagesystem für Solarmodule mit U-förmigen Schienen, die in quergeschlitzte Träger eingesetzt sind.

Die DE 10 2009 005540 B3 betrifft eine Montagevorrichtung für einen Erdkollektor mit Trägern und U-förmigen Befestigungselementen für die Rohre des Erdkollektors.

Bisher gibt es jedoch kein einfaches Montagesystem, dass das Anbringen eines Flächenheiz- oder Kühlsystems sowie darüber oder davor angeordneter plattenförmiger Elemente in standardisierter Weise an einem beliebigen Untergrund ermöglicht. Der vorliegenden Erfindung liegt daher die Aufgabe zugrunde, ein derartiges Montagesystem zur Verfügung zu stellen.

Die Aufgabe wird gelöst durch ein Montagesystem für ein durch plattenförmige Elemente abgedecktes Flächenheiz- oder Kühlsystem mit den Merkmalen des Anspruchs 1.

Bei dem erfindungsgemäßen Montagesystem können die Vierkant-Träger auf einen beliebigen Untergrund, beispielsweise auf einer Dachkonstruktion befestigt werden. Der gegenseitige Abstand kann den Abmessungen der verwendeten plattenförmigen Elemente angepasst werden. Die Rohre für die Kühl- oder Heizflüssigkeit eines Kühl- oder Heizsystems lassen sich über mehrere Vierkant-Träger quer zu deren Längsrichtung hinweg führen, wodurch die gegenseitige Verbindung einzelner Kollektoren untereinander, wie dies bei marktüblichen Sonnenkollektoren der Fall ist, hier entfallen kann. Außerdem sorgen die Vierkant-Träger dafür, dass das Heizsystem und die plattenförmigen Elemente durch den Zwischenraum zwischen dem Untergrund und den Wärmeleitflächen hinterlüftet werden kann.

Nach der Montage der Vierkant-Träger werden die Montageschienen auf die Vierkant-Träger aufgesetzt, wobei die Schenkel der Montageschienen die Vierkant-Träger seitlich übergreifen. Die Querschlitze in der Basis der Montageschienen können dem Rohrdurchmesser für die Heiz- und/oder Kühlflüssigkeit angepasst werden. Auch der gegenseitige Abstand der Querschlitze lässt sich einfach an die jeweiligen Erfordernisse anpassen. Die Wärmeleitbleche dienen der optimalen Wärmeübertragung zwischen den Rohren und den plattenförmigen Elementen. Mit ihrer Hilfe kann den plattenförmigen Elementen entweder Wärme zugeführt oder aber Wärme von diesen abgeführt werden.

Die plattenförmigen Elemente können vorzugsweise Photovoltaikmodule sein. Mit diesen Modulen kann ein Teil des Spektrums des Sonnenlichts zur Stromerzeugung genutzt werden. Neben der Stromerzeugung durch die Photovoltaikmodule wird auch die durch die Sonne erzeugte Wärme genutzt. Die Wärme wird über die Leitbleche von den Photovoltaikmodulen ab- und der in den Rohren zirkulierenden Flüssigkeit zugeführt. Die Abführung der Wärme von den Photovoltaikmodulen hat zudem den Vorteil, dass deren Betriebstemperatur in einem optimalen Bereich gehalten werden kann. Im Winter können die Photovoltaikmodule dagegen beheizt werden, indem heiße Flüssigkeit durch die Rohre geleitet wird. Auf diese Weise lassen sich die Photovoltaikmodule Schnee- und Eisfrei halten. Als plattenförmige Elemente lassen sich jedoch nicht nur Photovoltaikmodule, sondern auch andere Fassaden- oder Dachplatten einsetzen.

Weitere Vorteile ergeben sich, wenn die Montageschienen in Längsrichtung geneigt auf die Vierkant-Träger aufsetzbar sind. Auf diese Weise erhalten auch die plattenförmigen Elemente eine Neigung, was das Ablaufen von Regenwasser erleichtert. Werden mehrere Einzelschienen hintereinander auf die Vierkant-Träger aufgesetzt, wobei jede Montageschiene eine der Höhe eines plattenförmiges Elements entsprechende Länge aufweist, so können die einzelnen Platten auch in unterschiedlicher Neigung und in unterschiedlichen gegenseitigem Abstand angeordnet werden. Insbesondere können mehrere, in Längsrichtung geneigten Montageschienen hintereinander auf die Vierkant-Träger aufgesetzt werden, wobei sich benachbarte Montageschienen an der Stoßstelle überlappen, wodurch eine schuppenartige Anordnung mehrerer plattenförmiger Elemente in Längsrichtung der Vierkant-Träger möglich ist, was insbesondere bei der Montage des Flächenheiz- und Kühlsystems auf einer Dachfläche von Vorteil ist. An den Überlappungsstellen können Dichtigkeitsprobleme zuverlässig vermieden werden, wenn die plattenförmigen Elemente dachziegelartig überlappend montiert werden. Dabei ist es weiter von Vorteil, wenn die Montageschienen an ihrem gegenüber der Oberfläche der Vierkant-Träger höher liegenden Ende mit einem Anschlag für eine Kante eines plattenförmigen Elements versehen sind, an dem das plattenförmige Element auch befestigbar ist. Der Anschlag hält das plattenförmige Element in Position und dient gleichzeitig seiner Befestigung. Die Montage der plattenförmigen Elemente lässt sich dadurch weiter vereinfachen.

Bei einer bevorzugten Ausführungsform weisen die Querschlitze der Montageschienen einen dem Querschnitt der Vertiefungen der Wärmeleitbleche angepassten U-förmigen Querschnitt auf. Dadurch werden die Wärmeleitbleche sowie die darin verlegten Rohre sicher in den Querschlitzen gehalten.

Bei einer weiteren bevorzugten Ausführungsform entspricht die Tiefe der Vertiefungen der Wärmeleitbleche einem Vielfachen des Durchmessers der in den Vertiefungen verlegbaren Rohre. Dadurch entsteht ein Abstand zwischen den Auflageflächen der Wärmleitbleche und den Montageschienen und gleichzeitig ein Abstand zwischen den auf die Wärmeleitbleche aufgelegten plattenförmigen Elementen und den Montageschienen. Durch diese Maßnahme wird der Hinterlüftungsraum zwischen dem Untergrund und den plattenförmigen Elementen weiter vergrößert.

Bei einer bevorzugten Ausgestaltung des Montagesystems sind die Vierkant-Träger Vierkanthölzer, die preiswert und einfach zu montieren sind. Sie können an einer Fassade oder einer Dachkonstruktion eines Gebäudes befestigbar sein. Aber auch eine Montage an einer separaten Einrichtung ist möglich.

Nachfolgend wird ein bevorzugtes Ausführungsbeispiel eines erfindungsgemäßen Montagesystems anhand der Zeichnung näher beschrieben.

Es zeigen:
- Fig. 1: eine perspektivische Ansicht auf parallel angeordnete Vierkant-Träger eines erfindungsgemäßen Montagesystems;
- Fig. 2: eine perspektivische Ansicht der Vierkant-Träger aus Fig. 1 mit aufgesetzten Montageschienen;
- Fig. 3: eine perspektivische Einzeldarstellung einer Montageschiene aus Fig. 2;
- Fig. 4: eine perspektivische Ansicht der Vierkant-Träger und Montageschienen aus Fig. 2 mit eingesetzten Wärmeleitblechen;
- Fig. 5: eine perspektivische Einzeldarstellung eines Wärmeleitblechs aus Fig. 4;

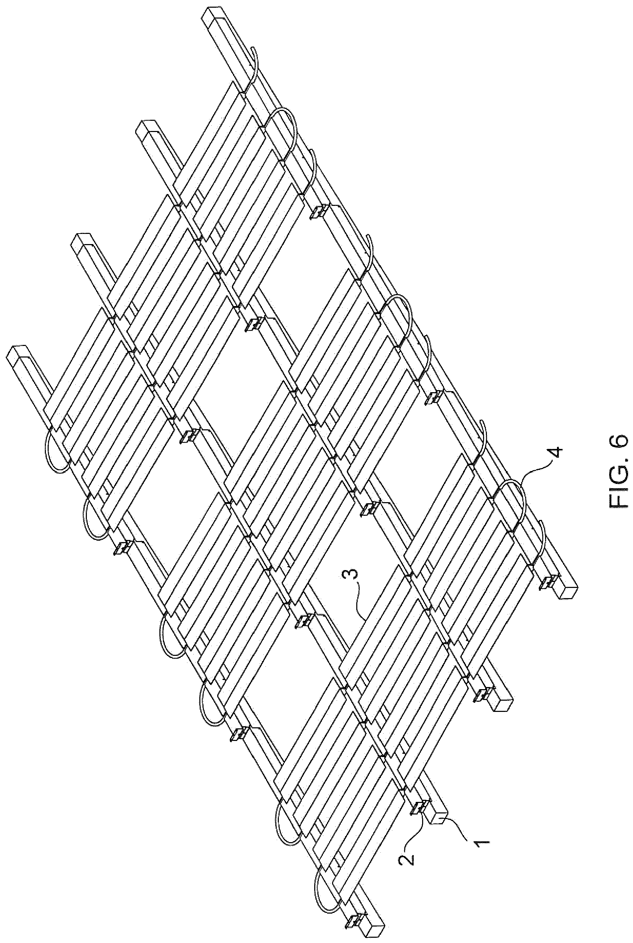

- Fig. 6: eine perspektivische Ansicht der Vierkant-Träger, Montageschienen und Wärmeleitbleche aus Fig. 4 mit eingelegten Rohren für eine Kühl- und/oder Heizflüssigkeit;
- Fig. 7: eine perspektivische Ansicht des Montagesystems aus Fig. 6 mit aufgesetzten plattenförmigen Elementen;
- Fig. 8: eine Seitenansicht der Anordnung aus Fig. 7 ohne Rohre.

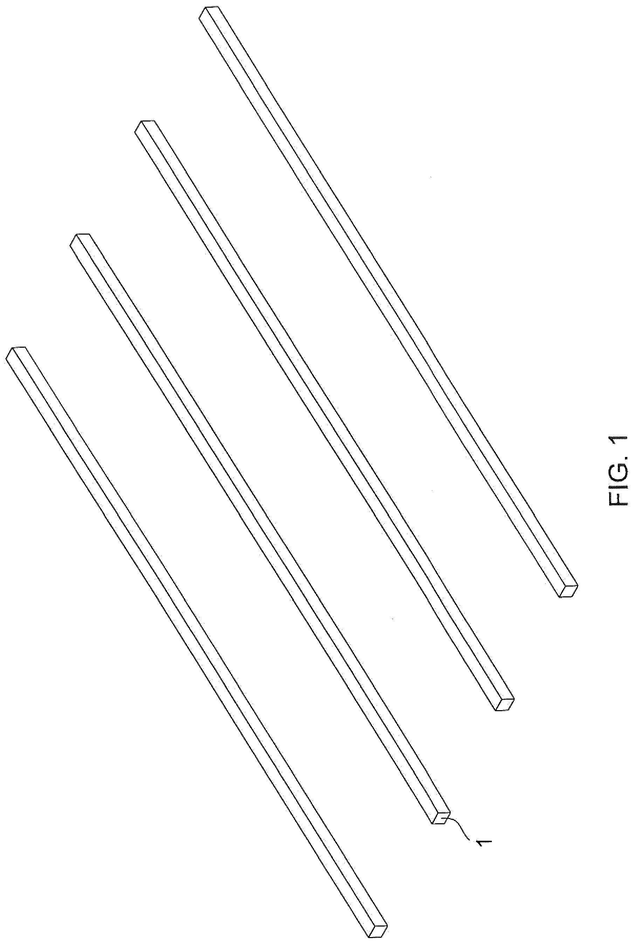

Fig. 1 zeigt vier parallel angeordnete Vierkant-Träger 1 eines erfindungsgemäßen Montagesystems, wobei die Vierkant-Träger 1 auf einem beliebigen Untergrund, beispielsweise auf einer Dachkonstruktion befestigt werden können.

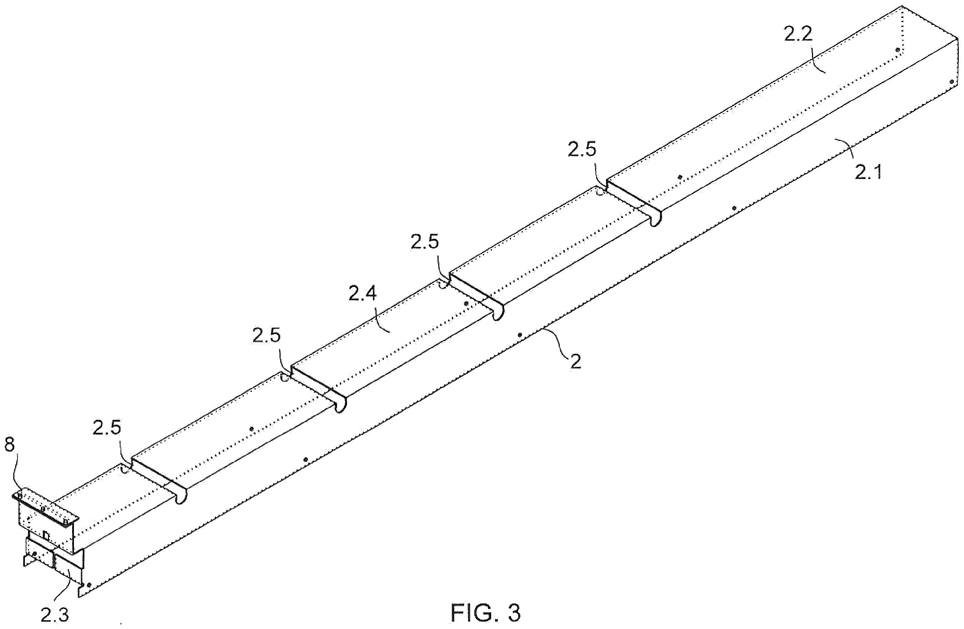

Nach dem Verlegen der Vierkant-Träger 1 werden auf diese mehrere Montageschienen in Längsrichtung der Vierkant-Träger hintereinander auf die Vierkant-Träger 1 aufgesetzt. Die Montageschienen sind dabei im Querschnitt U-förmig, wie insbesondere auch Fig. 3 verdeutlicht, und übergreifen mit ihren seitlichen Schenkeln 2.1 und 2.2 nach dem Aufsetzen die seitlichen Flanken der Vierkant-Träger 1.

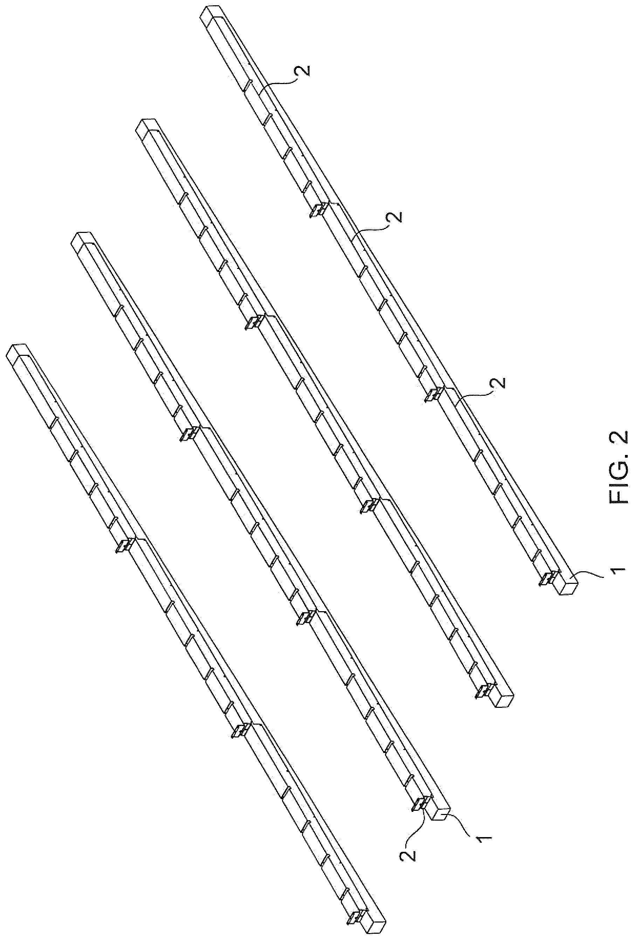

Weiter verdeutlicht Fig. 3, dass die Montageschienen 2 an einem ihrer Enden einen querverlaufenden Steg 2.3 aufweisen, der dafür sorgt, dass die Montageschiene nach dem Aufsetzen auf die Vierkant-Träger 1 geneigt zur Oberfläche der Vierkant-Träger 1 verläuft, wie Fig. 2 verdeutlich. Dadurch ist auch eine überlappende Anordnung benachbarter Montageschienen an der Stoßstelle zweier Schienen 2 möglich.

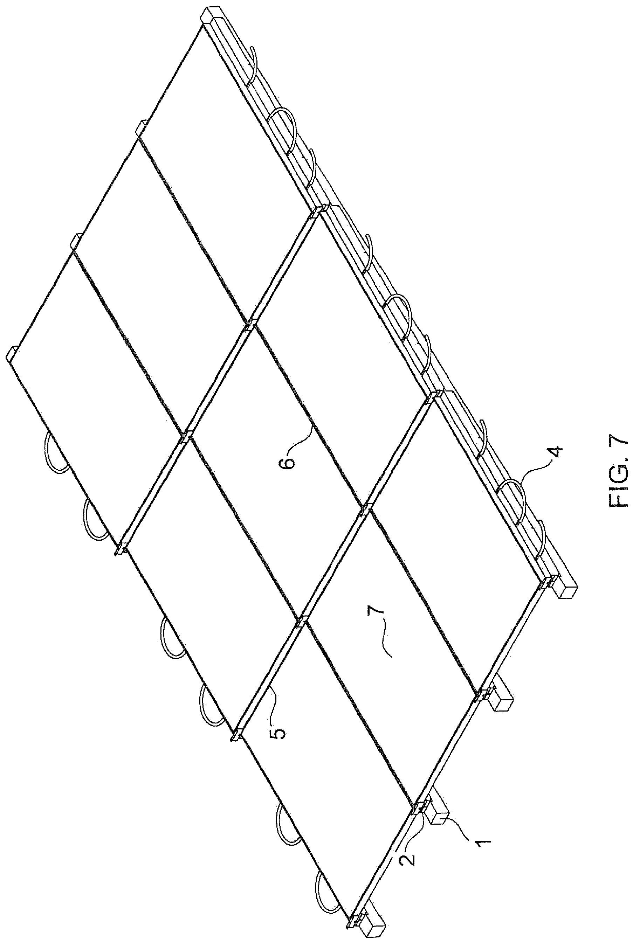

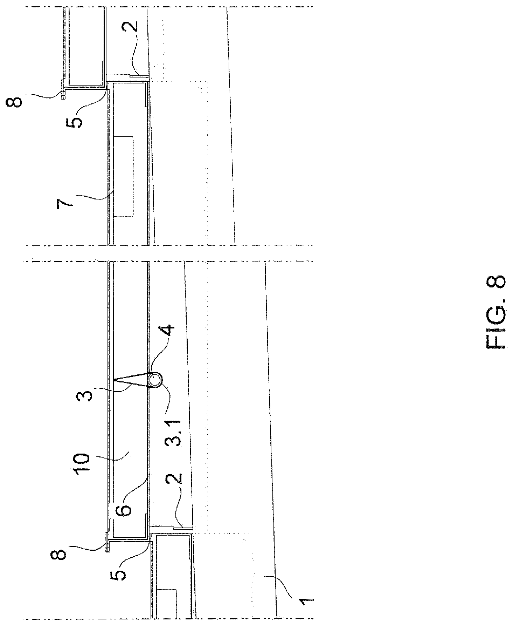

An demjenigen Ende, an dem der Steg 2.3 angeordnet ist, weisen die Montageschienen außerdem einen nach oben abstehenden Anschlag 8 für später aufzusetzende und aus den Fig. 7 und 8 ersichtliche plattenförmige Elemente 7 auf. Die Anschläge 8 dienen gleichzeitig der Befestigung der plattenförmigen Elemente 7. Weiter sind die Montageschienen an ihrer Basis 2.4 mit querverlaufenden rinnenförmigen Schlitzen 2.5 versehen.

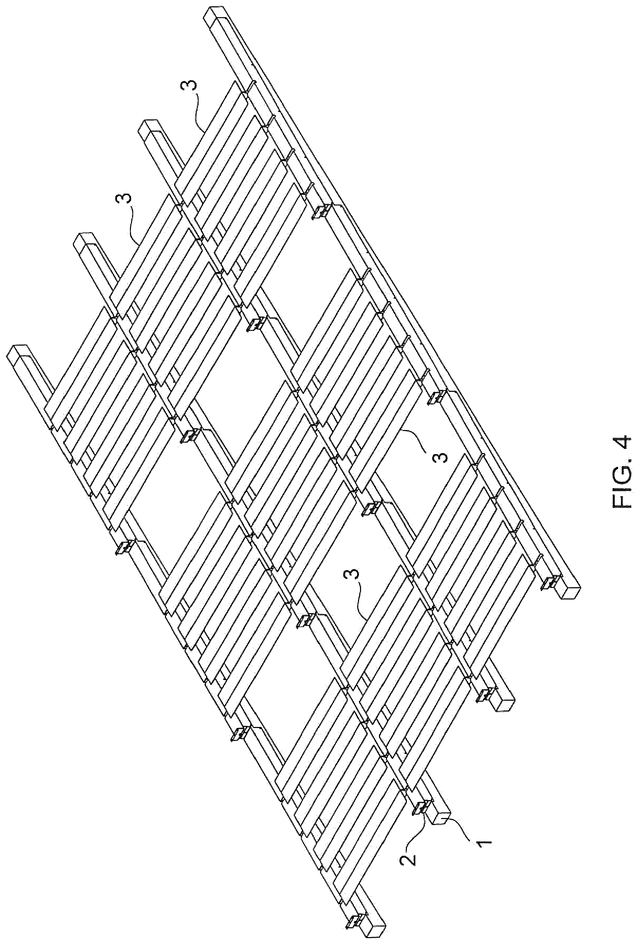

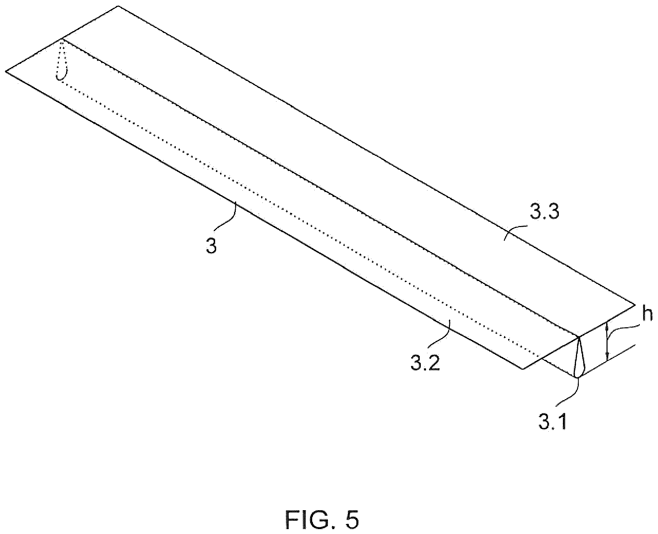

In diese Querschlitze 2.5 lassen sich aus den Fig. 4 und 5 ersichtliche Wärmeleitbleche 3 einsetzen. Im dargestellten Beispiel entspricht die Länge der Wärmeleitbleche 3 dem gegenseitigen Abstand der Vierkant-Träger 1. Es könnten jedoch auch Wärmeleitbleche 3 vorgesehen werden, deren Länge 2 oder 3 Zwischenräume zwischen den Vierkant-Trägern 1 überspannt.

Wie Fig. 5 verdeutlicht, weisen die Wärmeleitbleche eine zentrale, längsverlaufende Vertiefung 3.1 auf, die einen U-förmigen Querschnitt besitzen, der dem Querschnitt der Querschlitze 2.5 der Montageschienen 2 entspricht. Mit diesen Vertiefungen 3.1 werden die Wärmeleitbleche 3 in den Querschlitzen 2.5 verankert. Die Höhe h der Vertiefungen 3.1 entspricht dabei einem Vielfachen des Durchmessers der U-förmigen Vertiefungen 3.1. Dadurch stehen die Wärmeleitbleche nach dem Einsetzen in die Querschlitze 2.5 der Montageschienen 2 mit ihren Auflageflächen 3.2, 3.3 deutlich über die Vierkant-Träger 1 über, wie insbesondere Fig. 8 verdeutlicht.

Nach dem Einsetzen der Wärmeleitbleche 3 in die Montageschienen 2 werden in den Vertiefungen 3.1 der Wärmeleitbleche 3 Rohre 4 für eine Kühl- und/oder Heizflüssigkeit verlegt. Die Wärmeleitbleche 3 dienen im Betrieb des Heiz- oder Kühlsystems dazu, Wärme von plattenförmigen Elementen 7, die gemäß Fig. 7 nach dem Einlegen der Rohre 4 in die Wärmeleitbleche 3 auf die Wärmeleitbleche 3 aufgesetzt werden, zu den Rohren 4 zu leiten und damit die in den Rohren zirkulierende Flüssigkeit aufzuheizen. Gleichzeitig werden die plattenförmige Elemente 7 dadurch gekühlt. Über die Wärmeleitbleche 3 können die plattenförmige Elemente 7 jedoch auch beheizt werden. In diesem Falle wird die Wärme von einer Heizflüssigkeit in den Rohren 4 und den Wärmeleitblechen zu den plattenförmigen Elementen 7 geleitet. Dadurch können die plattenförmigen Elemente 7 beispielsweise Schnee- und Eis frei gehalten werden.

Wie Fig. 7 außerdem verdeutlicht, sind zwischen den plattenförmigen Elementen 7 horizontale Dichtungen 5 und vertikale Dichtungen 6 angeordnet, sodass die plattenförmige Elemente 7 insgesamt eine wasserdichte Dachoberfläche oder Gebäudefassade bilden können. Die plattenförmige Elemente 7 können vorzugsweise Photovoltaikmodule sein. Auf diese Weise kann die Sonneneinstrahlung sowohl zur Stromerzeugung als auch zum Heizen eines Gebäudes eingesetzt werden.

Aus der Seitenansicht in Fig. 8 ist die überlappende Anordnung der Montageschienen 2 und damit auch der plattenförmigen Elemente 7 ersichtlich. Weiter ist erkennbar, dass durch die Höhe der Vertiefungen 3.1 ein Freiraum 10 zwischen den Montageschienen 2 und den plattenförmigen Elementen 7 entsteht. Über diesen Freiraum 10 sind die plattenförmigen Elemente 7 hinterlüftbar, was insbesondere beim Einsatz von Photovoltaikmodulen als plattenförmiges Element 7 von Vorteil ist. Nicht nur durch die Wärmeabführung mittels der Wärmeleitbleche 3, sondern auch durch die Hinterlüftung kann die Betriebstemperatur der Photovoltaikmodule in einem optimalen Bereich gehalten werden.

## Patentansprüche

1. Montagesystem für ein durch plattenförmige Elemente abgedecktes Flächenheiz- oder Kühlsystem mit mehreren, parallel zueinander auf einem Untergrund befestigbaren Vierkant-Trägern (1), mit U-förmigen, aus einer Basis (2.4) und seitlichen Schenkeln (2.1, 2.2) bestehenden Montageschienen (2), die auf die Vierkant-Träger (1) derart aufsetzbar sind, dass sie mit den seitlichen Schenkeln (2.1, 2.2) die seitlichen Flanken der Vierkant-Träger (1) übergreifen, und die an der Basis (2.4) mit rinnenförmigen Querschlitzen (2.5) versehen sind, und mit Wärmeleitblechen (3), die mit einer U-förmigen Vertiefung (3.1) versehenen sind, die in die rinnenförmigen Querschlitze (2.5) der Montageschienen ((2) einsetzbar sind und zur Aufnahme von Rohren (4) des Heiz- und/oder Kühlsystems dienen, wobei die plattenförmigen Elemente (7) auf die Montageschienen (2) mit den Wärmeleitblechen (3) aufsetzbar und an den Montageschienen (2) befestigbar sind.

2. Montagesystem nach Anspruch 1, **dadurch gekennzeichnet, dass** die plattenförmigen Elemente (7) Photovoltaikmodule sind.

3. Montagesystem nach Anspruch 1 oder 2, **dadurch gekennzeichnet, dass** auf die Vierkant-Träger (1) in deren Längsrichtung mehrere Montageschienen (2) hintereinander aufsetzbar sind, wobei jede Montageschiene (2) eine der Höhe eines plattenförmigen Elements (7) entsprechende Länge aufweist.

4. Montagesystem nach einem der vorhergehenden Ansprüche, **dadurch gekennzeichnet, dass** die Montageschienen (2) in Längsrichtung geneigt auf die Vierkant-Träger (1) aufsetzbar sind.

5. Montagesystem nach Anspruch 4, **dadurch gekennzeichnet, dass** die Montageschienen (2) an einem ihrer Enden einen querverlaufenden Steg (2.3) aufweisen.

6. Montagesystem nach Anspruch 3 und 4 oder 5, **dadurch gekennzeichnet, dass** mehrere, in Längsrichtung geneigte Montageschienen (2) hintereinander auf die Vierkant-Träger (1) aufsetzbar sind, wobei sich benachbarte Montageschienen (2) an der Stoßstelle überlappen, wodurch eine überlappende Anordnung mehrerer plattenförmiger Elemente (7) in Längsrichtung der Vierkant-Träger (1) möglich ist.

7. Montagesystem nach Anspruch 6, **dadurch gekennzeichnet, dass** die Montageschienen (2) an ihrem höher liegenden Ende mit einem Anschlag (8) für eine Kante eines plattenförmigen Elements (7) versehen sind, an dem das plattenförmige Element (7) befestigbar ist.

8. Montagesystem nach einem der vorhergehenden Ansprüche, **dadurch gekennzeichnet, dass** die Querschlitze (2.5) der Montageschienen (2) einen U-förmigen Querschnitt aufweisen.

9. Montagesystem nach einem der vorhergehenden Ansprüche, **dadurch gekennzeichnet, dass** die Tiefe (h) der Vertiefungen (3.1) der Wärmeleitbleche (3) einem Vielfachen des Durchmessers der in den Vertiefungen (3.1) verlegbaren Rohre (4) entspricht.

10. Montagesystem nach einem der vorhergehenden Ansprüche, **dadurch gekennzeichnet, dass** die Vierkant-Träger (1) Vierkanthölzer sind.

11. Montagesystem nach einem der vorhergehenden Ansprüche, **dadurch gekennzeichnet, dass** die Vierkant-Träger (1) an einer Fassade oder einer Dachkonstruktion eines Gebäudes befestigbar sind.

12. Verfahren zur Montage eines durch plattenförmige Elemente (7) abgedeckten Flächenheiz- oder Kühlsystems, **dadurch gekennzeichnet, dass** mehrere Vierkant-Träger (1) parallel zueinander auf einem Untergrund befestigt werden, auf die Vierkant-Träger (1) U-förmige Montageschienen (2) aufgesetzt werden, sodass die Montageschienen (2) mit ihren seitlichen Schenkeln (2.1, 2.2) die Vierkant-Träger seitlich übergreifen, wobei die Montageschienen (2) an ihrer Basis (2.4) mit rinnenförmigen Querschlitzen (2.5) versehen sind, in die mit einer U-förmigen Vertiefung (3.1) versehene Wärmeleitbleche (3) mit ihren Vertiefungen (3.1) eingesetzt und in die Vertiefungen (3.1) Rohre (4) des Heiz- und/oder Kühlsystems eingelegt werden, bevor die plattenförmigen Elemente (7) aufgesetzt und an den Montageschienen (2) befestigt werden.

## Claims

1. Mounting system for a panel heating or cooling system covered by plate-like elements, comprising
a plurality of square-section supports (1) that can be fastened to a substrate parallel to one another,
U-shaped mounting rails (2) consisting of a base (2.4) and side legs (2.1, 2.2), wherein said mounting rails can be placed on the square-section supports (1) in such a manner that they engage over the side flanks of the square-section supports (1) by means of the side legs (2.1, 2.2) and wherein they are each provided on the base (2.4) with channel-like transverse slots (2.5) and
heat-conducting plates (3) each provided with a U-shaped recess (3.1), wherein said heat-conducting plates can be inserted into the channel-like transverse slots (2.5) in the mounting rails (2) and serve to receive pipes (4) of the heating and/or cooling system,
wherein the plate-like elements (7) can be placed on the mounting rails (2) with the heat-conducting plates (3) and can be fastened to the mounting rails (2).

2. Mounting system according to claim 1, **characterised in that** the plate-like elements (7) are photovoltaic modules.

3. Mounting system according to claim 1 or claim 2, **characterised in that** a plurality of mounting rails (2) can be placed one behind the other on the square-section supports (1) in the longitudinal direction thereof, wherein each mounting rail (2) has a length corresponding to the height of one plate-like element (7).

4. Mounting system according to one of the preceding claims, **characterised in that** the mounting rails (2) can be placed on the square-section supports (1) inclined in the longitudinal direction.

5. Mounting system according to claim 4, **characterised in that** the mounting rails (2) are each provided at one of their ends with a transversely extending web (2.3).

6. Mounting system according to claim 3 and claim 4 or claim 5, **characterised in that** a plurality of mounting rails (2) inclined in the longitudinal direction can be placed one behind the other on the square-section supports (1), wherein adjacent mounting rails (2) overlap at the junction, thereby allowing for an overlapping arrangement of a plurality of plate-like elements (7) in the longitudinal direction of the square-section supports (1).

7. Mounting system according to claim 6, **characterised in that** the mounting rails (2) are each provided at their higher end with a stop (8) for an edge of a plate-like element (7), wherein the plate-like element (7) can be fastened to said stop.

8. Mounting system according to one of the preceding claims, **characterised in that** the transverse slots (2.5) in the mounting rails (2) have a U-shaped cross section.

9. Mounting system according to one of the preceding claims, **characterised in that** the depth (h) of the recesses (3.1) in the heat-conducting plates (3) corresponds to a multiple of the diameter of the pipes (4) that can be laid in the recesses (3.1).

10. Mounting system according to one of the preceding claims, **characterised in that** the square-section supports (1) consist of squared timber.

11. Mounting system according to one of the preceding claims, **characterised in that** the square-section supports (1) can be fastened to a façade or a roof structure of a building.

12. Method of mounting a panel heating or cooling system covered by plate-like elements (7), **characterised in that** a plurality of square-section supports (1) are fastened to a substrate parallel to one another and U-shaped mounting rails (2) are placed on the square-section supports (1) in such a manner that the mounting rails (2) engage laterally over the square-section supports by means of their side legs (2.1, 2.2), wherein the mounting rails (2) are each provided on their base (2.4) with channel-like transverse slots (2.5) into which heat-conducting plates (3) each provided with a U-shaped recess (3.1) are inserted by means of their recesses (3.1) and pipes (4) of the heating and/or cooling system are laid in the recesses (3.1) before the plate-like elements (7) are placed on and fastened to the mounting rails (2).

## Revendications

1. Système de montage pour un système surfacique de chauffage ou de refroidissement recouvert par des éléments en forme de plaque, comportant plusieurs poutres carrées (1) susceptibles d'être fixées parallèlement les unes aux autres sur un fond, comportant des rails de montage (2) en forme de U qui sont constitués par une base (2.4) et par des branches latérales (2.1, 2.2) et qui sont susceptibles d'être posés sur les poutres carrées (1) de manière à coiffer les flancs latéraux des poutres carrées (1) par les branches latérales (2.1, 2.2), et qui sont pourvus de fentes transversales (2.5) en forme de rainures sur la base (2.4), et comportant des tôles thermiquement conductrices (3) pourvues d'un renfoncement en forme de U (3.1), susceptibles d'être mises en place dans les fentes transversales (2.5) en forme de rainure des rails de montage (2) et servant à recevoir des tubes (4) du système de chauffage et/ou de refroidissement, les éléments en forme de plaque (7) pouvant être posés sur les rails de montage (2) avec les tôles thermiquement conductrices (3) et pouvant être fixés sur les rails de montage (2).

2. Système de montage selon la revendication 1, **caractérisé en ce que** les éléments en forme de plaque (7) sont des modules photovoltaïques.

3. Système de montage selon la revendication 1 ou 2, **caractérisé en ce que** plusieurs rails de montage (2) peuvent être posés les uns derrière les autres sur les poutres carrées (1) dans leur direction longitudinale, chaque rail de montage présentant une longueur qui correspond à la hauteur d'un élément en forme de plaque (7).

4. Système de montage selon l'une des revendications précédentes, **caractérisé en ce que** les rails de montage (2) peuvent être posés sur les poutres carrées (1) en étant inclinés en direction longitudinale.

5. Système de montage selon la revendication 4, **caractérisé en ce que** les rails de montage (2) présentent à l'une de leurs extrémité une barrette transversale (2.3).

6. Système de montage selon la revendication 3 et 4 ou 5, **caractérisé en ce que** plusieurs rails de montage (2) inclinés en direction longitudinale peuvent être posés les uns derrière les autres sur les poutres carrées (1), des rails de montage voisins (2) venant se chevaucher à un emplacement de jointure, ce qui permet un agencement en chevauchement de plusieurs éléments en forme de plaque (7) en direction longitudinale des poutres carrées (1).

7. Système de montage selon la revendication 6, **caractérisé en ce que** les rails de montage (2) sont pourvus, à leur extrémité située plus haut, d'une butée (8) pour une arête d'un élément en forme de plaque (7), butée sur laquelle l'élément en forme de plaque (7) peut être fixé.

8. Système de montage selon l'une des revendications précédentes, **caractérisé en ce que** les fentes transversales (2.5) des rails de montage (2) présentent une section transversale en forme de U.

9. Système de montage selon l'une des revendications précédentes, **caractérisé en ce que** la profondeur (h) des renfoncements (3.1) des tôles thermiquement conductrices (3) correspond à un multiple du diamètre des tubes (4) susceptibles d'être posés dans les renfoncements (3.1).

10. Système de montage selon l'une des revendications précédentes, **caractérisé en ce que** les poutres carrées (1) sont des bois carrés.

11. Système de montage selon l'une des revendications précédentes, **caractérisé en ce que** les poutres carrées (1) peuvent être fixées sur une façade ou une construction de toiture d'un bâtiment.

12. Procédé de montage d'un système surfacique de chauffage ou de refroidissement recouvert par des éléments en forme de plaque (7), **caractérisé en ce que** plusieurs poutres carrées (1) sont fixées parallèlement les unes aux autres sur un fond, des rails de montage (2) en forme de U sont posés sur les poutres carrées (1) de telle sorte que les rails de montage (2) coiffent latéralement les poutres carrées (1) par leurs branches latérales (2.1, 2.2), les rails de montage (2) étant pourvus, sur leur base (2.4), de fentes transversales (2.5) en forme de rainures dans lesquelles des tôles thermiquement conductrices (3) pourvues d'un renfoncement en forme de U (3.1) peuvent être mises en place avec leurs renfoncements (3.1), et des tubes (4) du système de chauffage et/ou de refroidissement sont posés dans les renfoncements (3.1), avant de poser les éléments en forme de plaque (7) et de les fixer sur les rails de montage (2).
